Europäisches Patentamt

(19) European Patent Office

Office européen des brevets

(11) Numéro de publication: **0 331 563**
**A1**

(12) **DEMANDE DE BREVET EUROPEEN**

(21) Numéro de dépôt: 89400520.6

(22) Date de dépôt: 24.02.89

(51) Int. Cl.⁴: **B 60 D 1/12**

(30) Priorité: 02.03.88 FR 8802605

(43) Date de publication de la demande:
06.09.89 Bulletin 89/36

(84) Etats contractants désignés:
AT BE CH DE ES FR GB GR IT LI LU NL SE

(71) Demandeur: **SODISENE FABRICATION SA**
**10, rue Courmeaux**
**F-51100 Reims (FR)**

(72) Inventeur: **Mijot, Guy**
**3, rue des 16 et 22ème dragons**
**F-51100 Reims (FR)**

(74) Mandataire: **Gérardin, Robert Jean René**
**PROT'INNOV INTERNATIONAL SA 18 et 18bis, rue de**
**Bellefond BP 328-09**
**F-75428 Paris Cèdex 09 (FR)**

(54) Procédé et dispositif de contrôle à distance du système de sécurité d'un attelage de tracteur.

(57) L'invention concerne un procédé et un dispositif de contrôle à distance du système de sécurité d'un attelage de tracteur.

Le procédé consiste à signaler à distance, au conducteur d'un tracteur équipé d'un attelage lorsque la sécurité de celui-ci n'est pas assurée.

Le dispositif de contrôle à distance est, selon un mode de réalisation, constitué d'aimants permanents (3,6) portés par le moyen de remorquage (1) et le système de sécurité (5) et d'un boîtier-contacteur (8) renfermant au moins une diode à effet de champ assurant la fermeture d'un circuit électronique de commande d'une alarme lorsque les aimants permanents (3,6) ne sont pas dans l'alignement du boîtier-contacteur (8).

FIG.1

Description

## Procédé et dispositif de contrôle à distance du système de sécurité d'un attelage de tracteur.

L'invention concerne un procédé et un dispositif de contrôle à distance du système de sécurité d'un attelage de tracteur.

Les crochets et autres moyens de remorquage qui équipent les attelages de tracteurs agricoles ou de travaux publics comportent des pièces en mouvement relatif qui doivent se trouver dans une position bien définie pour réunir les conditions de sécurité d'attelage assurant, dans les conditions optimums, les fonctions d'attelage et de sécurité du dispositif d'accrochage.

Dans cette dernière situation, l'attelage ne doit pas pouvoir être manoeuvré de façon intempestive; aussi équipe-t-on les attelages d'un système de sécurité dont l'effacement volontaire est obligatoire avant toute action sur l'attelage.

L'état actuel de la technique permet, bien sûr, d'effectuer la manoeuvre de l'attelage et du système de sécurité à distance, à partir du poste de conduite.

On comprend aisément que le moyen de remorquage puisse être manoeuvré par l'intermédiaire de glissières, de coulisseaux et de vérins hydrauliques et que les moyens de sécurité puissent, eux, être manoeuvrés à distance par tout autre moyen du genre tel qu'un câble monté dans une gaine flexible par exemple.

Il résulte, de cette commodité de manoeuvres à distance, une perte de vision, par le conducteur du tracteur, des pièces en mouvement et de la position exacte de celles-ci et tout particulièrement des composants actifs du système de sécurité : ceci bien que les positions extrêmes des éléments soient matérialisées par des repères. En effet, des déréglages peuvent intervenir en cours d'utilisation, dûs notamment aux vibrations, aux chocs et aux secousses qu'ils subissent, en utilisation, dans ces domaines d'activité.

Le procédé et le dispositif de contrôle à distance du système de sécurité des attelages de tracteurs selon l'invention visent à résoudre le problème consistant à signaler à distance, au conducteur d'un tracteur, lorsque la sécurité de l'attelage n'est pas assurée.

Le procédé utilisé pour obtenir le contrôle à distance du système de sécurité consiste, principalement, à déclencher automatiquement, dans la cabine de conduite du tracteur, un signal sonore ou/et visuel qui n'est interrompu que lorsque toutes les conditions de sécurité sont réunies.

Lors du déverrouillage, le signal sonore ou/et visuel est émis dès que le processus d'ouverture est amorcé, il n'est interrompu que lorsque le système de verrouillage est revenu en position de sécurité.

Lors de l'opération de verrouillage, le signal sonore ou/et visuel est émis dès que le système de verrouillage bascule en position d'ouverture et il n'est interrompu que lorsque le système de verrouillage et le dispositif de remorquage sont revenus en position de sécurité, d'accrochage.

Un signal électrique de commande d'une alarme sonore ou/et visuelle est émis dès qu'un décalage, d'une amplitude déterminée, apparaît entre un ou plusieurs repères fixes par rapport au châssis du tracteur et certains points particuliers situés respectivement sur le dispositif de remorquage et sur le système de verrouillage; ces points, et le ou les repères fixes, étant normalement en corcondance lorsque l'attelage est en position de verrouillage.

Selon un mode d'application préférentiel du procédé faisant l'objet de l'invention, le dispositif utilisé pour la mise en oeuvre de celui-ci est constitué essentiellement d'aimants permanents, portés respectivement par le dispositif de remorquage et par le système de verrouillage, d'un boîtier-contacteur étanche solidaire du châssis du tracteur, renfermant un contacteur sensible aux champs magnétiques des aimants, et un circuit électronique reliant, en série, ledit contacteur sensible aux champs magnétiques, avec une source d'énergie électrique à basse tension et un générateur de signaux visuels ou/et sonores.

En position de verrouillage, le boîtier étanche renfermant le contacteur sensible aux champs magnétiques des aimants, solidaire du châssis du tracteur, et les aimants portés respectivement par le dispositif de remorquage et le système de verrouillage sont normalement alignés.

Le contacteur sensible au champ magnétique des aimants pouvant être constitué d'au moins une diode à effet de champ par exemple.

Les avantages obtenus grâce à cette invention consistent essentiellement en ceci que le conducteur est averti dès qu'il actionne le dispositif permettant de libérer le verrouillage de l'attelage; dans le cas où il est fait appel à l'hydraulique du tracteur pour libérer le verrouillage, cette alarme incite ledit conducteur à ne pas rester trop longtemps dans la position qui sollicite le système hydraulique, afin de réduire au strict minimum l'effet de laminage du liquide hydraulique et à n'effectuer aucune manoeuvre du tracteur tout le temps que cette alarme n'a pas cessé.

D'autres caractéristiques et avantages apparaîtront dans la description qui va suivre d'un dispositif de contrôle à distance d'un crochet d'attelage, mettant en oeuvre des aimants permanents et une diode à effet de champ, réalisé selon l'invention, donné à titre d'exemple non limitatif au regard des dessins annexés sur lesquels :

- la figure 1 représente un crochet d'attelage en position de sécurité,

- la figure 2 représente un crochet d'attelage en cours de sollicitation vers le haut par le relevage hydraulique, avant sa libération par le système de sécurité,

- la figure 3 représente un crochet d'attelage maintenu en butée supérieure par le relevage hydraulique pour permettre l'effacement des crochets de sécurité,

- la figure 4 représente un crochet d'attelage en position correspondant à la figure 1, mais, avec effacement des crochets de sécurité,

- la figure 5 représente un crochet d'attelage en position basse avec retour en position d'attente des crochets de sécurité.

Les figures représentent : un crochet d'attelage 1, comportant des doigts de retenue 2, à la partie supérieure 1a duquel a été implanté un aimant permanent 3; des crochets de sécurité 4 sur la barrette de jonction 5 desquels a été implanté un autre aimant permanent 6 ; un axe 7 d'articulation desdits crochets de sécurité 4 et un boîtier-contacteur 8 solidaire du châssis 9 du tracteur.

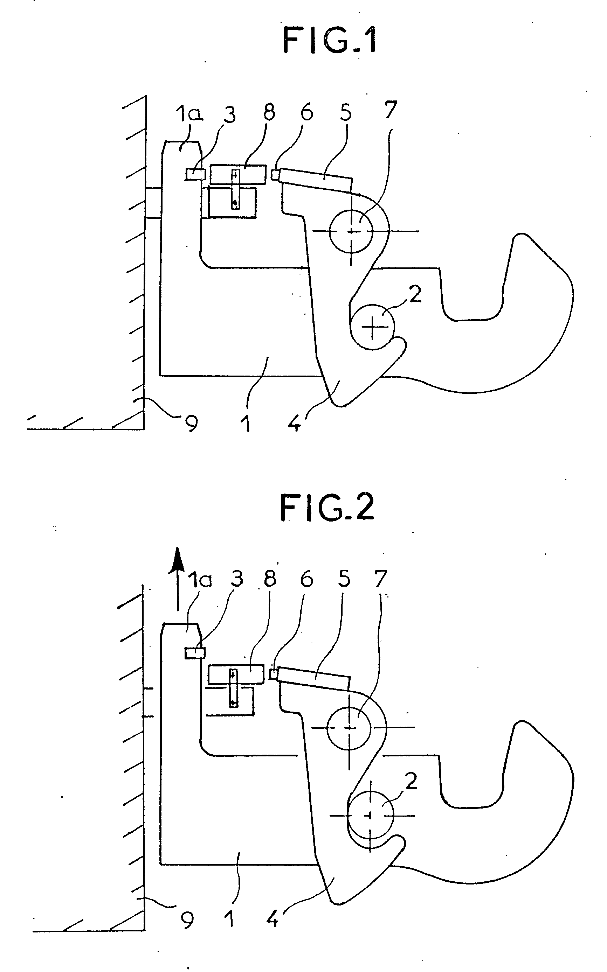

En examinant la figure 1, on remarque que, en position de travail de l'attelage, lorsque le crochet de remorquage 1 est soutenu par les crochets de sécurité 4 et ses doigts de retenue 2, les aimants permanents 3 et 6, portés respectivement par la partie supérieure 1a du crochet de remorquage 1 et par la barrette de jonction 5 des crochets de sécurité 4, ainsi que le boîtier-contacteur 8 solidaire du châssis 9 du tracteur se trouvent alignés: ce qui se traduit par une ouverture par la diode à effet de champ du circuit électronique de commande du système d'alarme.

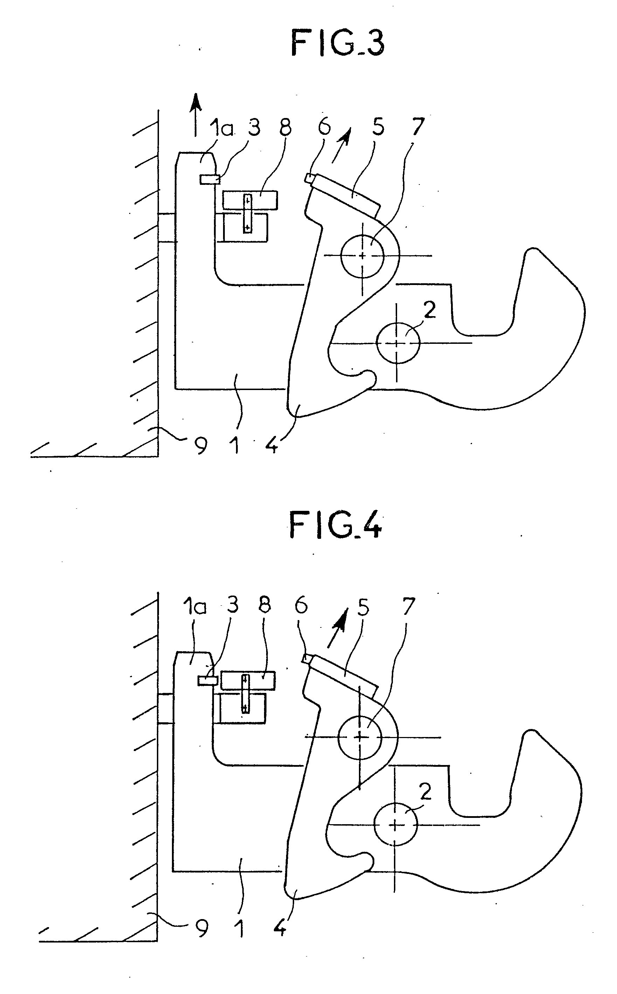

En examinant maintenant conjointement les figures 2 et 3, on remarque que, lorsque le conducteur actionne le dispositif de relevage hydraulique du tracteur pour libérer le verrouillage de l'attelage, les aimants permantents 3 et 6, portés respectivement par la partie supérieure 1a du crochet d'attelage 1 et par la barrette de jonction 5 des crochets de sécurité 4, par le soulèvement du crochet de remorquage 1 et le basculement des crochets de sécurité 4, se trouvent décalés vers le haut et, par conséquent, désalignés par rapport au boîtier-contacteur 8 ; la diode à effet de champ n'étant plus soumise au champ magnétique des aimants permanents 3 et 6, provoque la fermeture du circuit électronique de commande du système d'alarme qui se trouve ainsi mis en fonction.

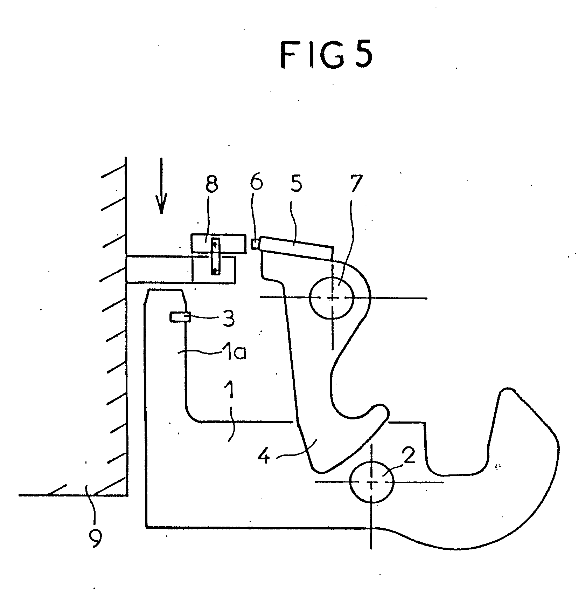

En examinant maintenant les figures 4 et 5, on remarque que, lors du relâchement du relevage hydraulique du tracteur et de l'abaissement du crochet de remorquage 1, l'aimant permanent 3, encastré dans la partie supérieure 1a dudit crochet 1, passe en dessous du niveau du boîtier-contacteur 8, après avoir provoqué un arrêt momentané, très bref, du système d'alarme lors de son passage devant le boîtier-contacteur 8. L'alarme est ensuite, maintenue tout le temps que les crochets de sécurité 4 ne sont pas revenus en position de verrouillage, c'est-à-dire jusqu'à ce que l'aimant permanent 6, porté par la barrette de jonction 5, soit revenu dans l'alignement du boîtier-contacteur 8.

Ainsi, comme on le voit, le conducteur est en permanence averti de la situation de l'attelage du tracteur lors des manoeuvres de celui-ci.

Il va de soi que le dispositif de contrôle à distance peut différer, dans son mode de réalisation, de celui décrit ci-dessus comme exemple; les aimants permanents peuvent être remplacés, par exemple, par des pastilles colorées combinées à une cellule analogique incorporée au boîtier-contacteur, et d'une manière générale, par tout moyen permettant de transformer des variations de positionnement de pièces en signaux électriques susceptibles d'assurer l'actionnement direct ou indirect d'une alarme : cette dernière pouvant revêtir toute forme et être munie de tout moyen permettant sa vérification, de contrôler son état, etc...

Le procédé et le dispositif selon l'invention sont destinés principalement aux tracteurs agricoles ou de travaux publics.

## Revendications

1. Procédé de contrôle à distance du système de sécurité d'un attelage de tracteur, consistant à déclencher automatiquement, dans la cabine de conduite, un signal sonore ou visuel qui n'est interrompu que lorsque toutes les conditions de sécurité sont réunies, caractérisé en ce qu'il consiste à obtenir l'émission d'un signal électrique de commande d'une alarme dès qu'un décalage d'une amplitude déterminée apparaît entre un ou plusieurs repères fixes par rapport au châssis du tracteur et certains points situés respectivement sur le dispositif de remorquage et sur le système de verrouillage ; ces points et le ou les repères fixes étant normalement en concordance lorsque l'attelage est en position de verrouillage.

2. Dispositif de contrôle à distance du système de sécurité d'un attelage de tracteur, selon le pocédé de la revendication 1, caractérisé en ce qu'il est constitué essentiellement d'aimants permanents (3, 6) portés respectivement par le dispositif de remorquage (1) et par le système de verrouillage (5), d'un boîtier-contacteur (8) renfermant un contacteur sensible au champ magnétique produit par chacun des aimants (3 ou 6) et un circuit électronique reliant en série ledit contacteur sensible au champ magnétique avec une source d'énergie électrique à basse tension et un générateur de signaux visuels ou/et sonores.

3. Dispositif de contrôle selon la revendication 2, caractérisé en ce que, en position de verrouillage, le boîtier-contacteur (8), renfermant le contacteur sensible au champ magnétique, solidaire du châssis du tracteur et les aimants (3, 6) portés respectivement par le dispositif de remorquage (1) et le système de verrouillage (5) sont normalement alignés.

4. Dispositif de contrôle selon la revendication 2, caractérisé en ce que le contacteur sensible au champ magnétique émis par les aimants (3, 6) est une diode à effet de champ.

EP 0 331 563 A1

# FIG.1

# FIG.2

# FIG.3

# FIG.4

# FIG 5

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 232 898 (ROCKINGER) <br> * Colonne 3, ligne 29 - colonne 4, ligne 42; colonne 5, lignes 26-30; figures 1,2 * <br> --- | 1 | B 60 D 1/12 |
| A | DE-A-3 018 905 (G. FISHER) <br> * Page 6, dernier paragraphe - page 7, ligne 13; page 7, ligne 29 - page 8, paragraphe 3; figures 1,2 * <br> --- | 1 | |
| A | EP-A-0 149 453 (ROCKINGER) <br> * Page 14, paragraphe 2; figure 20 * <br> --- | 1 | |
| A | DE-A-3 226 360 (ROCKINGER) <br> * Page 9, paragraphe 2; page 10, paragraphe 2; figures 1-3 * <br> ----- | 1 | |

| DOMAINES TECHNIQUES RECHERCHES (Int. Cl.4) |
|---|
| B 60 D <br> B 62 D <br> E 02 F |

Le présent rapport a été établi pour toutes les revendications

| Lieu de la recherche | Date d'achèvement de la recherche | Examinateur |
|---|---|---|
| LA HAYE | 31-05-1989 | LINTZ C.H. |